(19) Europäisches Patentamt

European Patent Office

Office européen des brevets

(11) **EP 1 263 237 A2**

(12) **EUROPEAN PATENT APPLICATION**

(43) Date of publication:
**04.12.2002 Bulletin 2002/49**

(51) Int Cl.$^7$: **H04N 7/30**, H04N 7/50

(21) Application number: **02253552.0**

(22) Date of filing: **21.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.05.2001  JP  2001156079**

(71) Applicant: **Pioneer Corporation**
**Meguro-ku, Tokyo (JP)**

(72) Inventor: **Harada, Seiji, c/o Pioneer Corporation**
**Tokorozawa-shi, Saitama-ken (JP)**

(74) Representative: **Townsend, Victoria Jayne et al**
**Fry Heath & Spence LLP**
**The Old College,**
**53 High Street**
**Horley, Surrey RH6 7BN (GB)**

(54) **Quantizing unit setting apparatus and method, coding apparatus and method, and information recording medium**

(57)     Provided is a quantizing unit setting apparatus (S) that enables decreasing the deterioration of a reproduced image when reproducing a moving picture. When setting a quantizing unit that is used for quantizing process when coding the moving picture, regarding the quantizing unit that sets the invention is equipped with an LPF (27) for suppressing the amount of fluctuation in a plurality of consecutive quantizing units.

# FIG. 2

BLOCK DIAGRAM ILLUSTRATING SCHEMATIC CONSTRUCTION OF
CODING APPARATUS ACCORDING TO THE EMBODIMENT

**Description**

BACKGROUND OF THE INVENTION

1.Field of the Invention

The present invention relates to a technical field that regards a quantizing unit setting apparatus and method, a coding apparatus and method, an information recording medium, and a quantizing unit setting program. More particularly, the invention concerns a technical field that regards a quantizing unit setting apparatus and method for setting a quantizing unit that is used to perform quantizing process that is executed when coding a moving picture, a coding apparatus including the quantizing unit setting apparatus, etc. and coding method, an information recording medium having recorded therein a program for setting the quantizing unit so that the program may be readable by a computer, and the program for setting the quantizing unit.

2.Description of the Related Art

A moving picture that is constructed of a plurality of static picture images has recently been coded and recorded in an optical disk, etc., or a moving picture that has been coded has recently been distribution-transmitted using broadcasting electric waves.

However, in a case where coding a moving picture in accordance with a conventional general procedure, for example, at a timing of scene change in a series of moving pictures, namely at a timing with which there rapidly change the coded amounts of information before decoding of the static picture images that are going to be reproduced before and after that timing, corresponding quantizing steps also rapidly changes. As a result, there has been the problem that the picture images that occurred when reproducing the coded moving picture deteriorated.

SUMMARY OF THE INVENTION

Whereupon, the present invention has been made in view of the above-described problems and has an object to provide a quantizing unit setting apparatus and method that enables decreasing the deterioration the quality of reproduction images at the time of reproducing an after-coding moving picture, a coding apparatus including the quantizing unit setting apparatus, etc. and coding method, an information recording medium having recorded therein a program for setting the quantizing unit so that the program may be readable by a computer, and the program for setting the quantizing unit.

The above object of the present invention can be achieved by a quantizing unit setting apparatus of the present invention. The quantizing unit setting apparatus for setting a quantizing unit that is used for quantizing process in coding a moving picture, is provided with: a suppressing device for suppressing the amount of fluctuation in a plurality of consecutive quantizing units and; an outputting device for outputting a suppressed quantizing unit.

According to the present invention, since, regarding the quantizing unit that has been set, there is suppressed the amount of fluctuation in each of a plurality of the consecutive quantizing units, it results that extreme fluctuation in the amount of coded information after coding is suppressed. It is thereby possible to execute coding while decreasing the turbulence of the reproduced image.

In one aspect of the present invention can be achieved by the quantizing unit setting apparatus of the present invention. The quantizing unit setting apparatus is the suppressing device is a low pass filter.

According to the present invention, it is possible to suppress the amount of fluctuation in the quantizing unit with a simple construction.

The above object of the present invention can be achieved by a coding apparatus of the present invention. The coding apparatus is provided with: the quantizing unit setting apparatus according to claim 1; a quantizing device for quantizing the moving picture using the suppressed quantizing unit; a producing device for producing a quantized moving picture; and a coding device for coding the quantized moving picture.

According to the present invention, it is possible to code the moving picture while suppressing the turbulence of the reproduced image that has been reproduced from the coded moving picture.

The above object of the present invention can be achieved by a quantizing unit setting method of the present invention. The quantizing unit setting method for setting a quantizing unit that is used for quantizing process in coding a moving picture, the method is provided with the processes of: suppressing the amount of fluctuation in a plurality of consecutive quantizing units; and outputting a suppressed quantizing unit.

According to the present invention, since, regarding the quantizing unit that has been set, there is suppressed the amount of fluctuation in each of a plurality of the consecutive quantizing units, it results that extreme fluctuation in the amount of coded information after coding is suppressed. It is thereby possible to execute coding while decreasing

EP 1 263 237 A2

the turbulence of the reproduced image.

In one aspect of the present invention can be achieved by the quantizing unit setting method of the present invention. The quantizing unit setting method uses a low pass filter in the suppressing process.

According to the present invention, it is possible to suppress the amount of fluctuation in the quantizing unit with a simple construction.

The above object of the present invention can be achieved by a coding method of the present invention. The coding method is provided with the processes of: setting the quantizing unit according to claim 4; quantizing the moving picture using the suppressed quantizing unit; producing a quantized moving picture; and coding the quantized moving picture.

According to the present invention, it is possible to code the moving picture while suppressing the turbulence of the reproduced image that has been reproduced from the coded moving picture.

The above object of the present invention can be achieved by an information recording medium of the present invention. The information recording medium, on which a setting a quantizing unit program recorded readable by a computer that is included in a quantizing unit setting apparatus for setting a quantizing unit that is used for quantizing process in coding a moving picture, causes the computer to function as;a suppressing device for suppressing the amount of fluctuation in a plurality of consecutive quantizing units; and an outputting device for outputting a suppressed quantizing unit.

According to the present invention, since, regarding the quantizing unit that has been set, the computer functions so as to suppress the amount of fluctuation in each of a plurality of the consecutive quantizing units, it results that extreme fluctuation in the amount of coded information after coding is suppressed. It is thereby possible to execute coding while decreasing the turbulence of the reproduced image.

In one aspect of the present invention can be achieved by the information recording medium of the present invention. The information recording medium, on which the quantizing unit program recorded readable by a computer, causes the computer to function as; the suppressing device is a low pass filter.

According to the present invention, it is possible to suppress the amount of fluctuation in the quantizing unit with a simple process.

In another aspect of the present invention can be achieved by the information recording medium of the present invention. The information recording medium, on which a setting the quantizing unit program according to claim 7, recorded readable by a computer included in the coding apparatus, causes the computer to function as; a quantizing device for quantizing the moving picture using the suppressed quantizing unit; and a producing device for producing a quantized moving picture.

According to the present invention, it is possible to code the moving picture while suppressing the turbulence of the reproduced image that has been reproduced from the coded moving picture.

The above object of the' present invention can be achieved by a quantizing unit setting program of the present invention. The quantizing unit setting program embodied on computer-readable medium for setting a quantizing unit that is used for quantizing process in coding a moving picture is provided with: a suppressing device for suppressing the amount of fluctuation in a plurality of consecutive quantizing units; and an outputting device for outputting a suppressed quantizing unit.

According to the present invention, since, regarding the quantizing unit that has been set, the computer functions so as to suppress the amount of fluctuation in each of a plurality of the consecutive quantizing units, it results that extreme fluctuation in the amount of coded information after coding is suppressed. It is thereby possible to execute coding while decreasing the turbulence of the reproduced image.

In one aspect of the present invention can be achieved by the quantizing unit setting program of the present invention. The quantizing unit setting program embodied on computer-readable medium according to claim 10, wherein the suppressing device functions as a low pass filter.

According to the present invention, it is possible to suppress the amount of fluctuation in the quantizing unit with a simple process.

BRIEF DESCRIPTION OF THE DRAWINGS

FIG. 1 is a view illustrating the principle of the present invention;
FIG. 2 is a block diagram illustrating a schematic construction of a coding apparatus according to an embodiment of the present invention;
FIG. 3 is a block diagram illustrating a detailed construction of a coding part according to the embodiment;
FIG. 4 is a view illustrating an example of frame images constituting a GOP;
FIG. 5 is a flow chart illustrating a quantizing step setting process according to the embodiment;

FIG. 6 is a view (I) illustrating the operation of the quantizing step setting process according to a modification of the embodiment of the present invention;

FIG. 7A is views (II) illustrating the operation of the quantizing step setting process according to the modification in a case where the buffer does not overflow.

FIG. 7B is views (II) illustrating the operation of the quantizing step setting process according to the modification in a case where the buffer overflows; and

FIG. 8 is a flow chart illustrating the quantizing step setting process according to the modification.

DESCRIPTION OF THE PREFERRED EMBODIMENTS

Next, a preferred embodiment of the present invention will be explained with reference to the drawings.

It is to be noted that an embodiment which will be explained below is the one wherein the present invention has been applied to a coding apparatus that performs compression coding of a moving picture that is constructed of a plurality of static picture images according to an MPEG2 that is an international standard specification for image compression coding for a moving picture.

(I) Priciple of the Present Invention

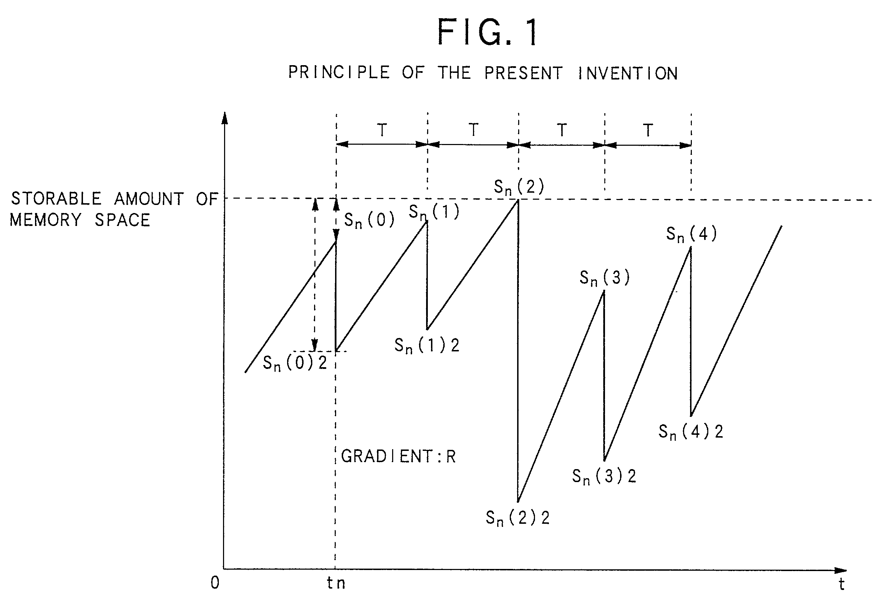

Initially, prior to explaining a specific embodiment, the principle of the present invention will be explained with the use of FIG. 1.

In general, when coding a moving picture according to the MPEG2 standard specification, at the time of performing that coding on the coding-apparatus side, it is necessary that that coding be performed while the stored amount of information in a buffer memory equipped on a decoding-apparatus side is being simulated (predicted) at all times.

At this time, for simulating the fluctuation in the stored amount of information in the buffer memory, the amount of information of each picture (the amount of information produced after the performance of the coding) that is coded during the simulation must be predicted.

On the other hand, for keeping fixed the quality of the after-coding image, it is necessary to change the amount of information of each picture according to the complexity of it.

Here, as the complexity information that serves as information that represents the complexity of the picture, a Global Complexity Measure (in some cases also called "the GCM"), for example, in a test model 5 that is a model used for various kinds of tests according to the MPEG2 method (MPEG-2 Test Model 5 Document ISO/IEC JTC 1 SC29 WG11/93-400, Test Model Editing Committee, April 1993) can be used.

Assuming now that a picture whose complexity information (GCM) is X be coded by a quantizing unit Q, the amount of information of that picture after coding of it is expressed as X/Q.

Next, for predicting the amount of information of each picture during the simulation, it is necessary to predict the complexity information X of each picture during the simulation.

Here, in a case where using the GCM as the complexity information X in the above-described MPEG2 standard, that complexity information X can be estimated according to the coding rate and the picture type as later described (namely, the types of the pictures in one GOP after the same have been coded and means an I picture, a P picture, and a B picture as later described). At this time, since the picture type periodically changes in almost all cases within a single GOP, it becomes possible to first predict the picture type and next estimate the complexity of the picture image to thereby predict the amount of information of each picture with the use of those factors.

With the above-described series of contents being premised, in the present invention, when coding a moving picture that is constructed of a plurality of static picture images, independently of the divisions each made as the GOP after coding is performed, there is predicted the amount of information after coding of a plurality of static picture images that plan to be decoded on the decoding-apparatus side from the present coding onwards. In the present invention, using that predicted value, there is simulated the fluctuation in the stored amount of information within the buffer memory included in a relevant decoding apparatus.

And, in order that the storable amount of space in the buffer memory may be equal to or greater than zero, i.e. in order that that buffer memory may not overflow, there is set a quantizing unit (in general it is in some cases also called "a quantizing step" or "a quantizing scale") that when the present static picture image is quantized and coded is used for that quantization.

Thereafter, regarding the quantizing steps after they have been set, the changes in the values of the quantizing steps are suppressed so as to prevent a plurality of consecutive quantizing steps from rapidly changing beyond a preset range.

It is to be noted that, at this time, the simulation is executed within a quantizing step setting part of the coding apparatus according to the embodiment as later described.

Next, the simulation of that amount of information will be explained in more detail taking up the coding apparatus and decoding apparatus based on the use of the CBR method, as an example.

Here, FIG. 1 illustrates the simulated results of the fluctuation in the stored amount of information of the buffer memory included in the decoding apparatus, that has been made to conform to the CBR method, at the time of coding the respective static picture images as described above. The ordinate axis shows the stored amount of information and the abscissa axis shows the time t that has lapsed in the process of coding.

More specifically, FIG. 1 illustrates the simulated states of the changes in the stored amounts of information in the buffer memory that occur with respect to the static picture images from the one that is coded at the present time up to the one that succeeds four pieces of picture image under the assumption that represents the timing at that an "n"th static picture image as counted after, in terms of time, from a foremost static picture image of a moving picture to be coded is coded. At this time, it is premised that information be supplied to the buffer memory for its reproduction always at a fixed coding rate.

Further, in FIG. 1, the storable amount of information within the buffer memory that prevails immediately before the present picture is decoded at the time tn is represented by a before-decoding empty memory space Sn(0), while the empty memory space within the buffer memory after decoding is represented by an after-decoding empty memory space Sn(0)2. Also, the empty memory space within the buffer memory immediately before an "i"th picture as counted after from the time tn is decoded is represented by a before-decoding empty memory space Sn(i), while the empty memory space within the buffer memory immediately after that "i"th picture has been decoded is represented by an after-decoding empty memory space Sn(i)2.

At this time, on the above-described premise, in a case where, in the coding apparatus that will be explained below, the picture pieces are coded and a relevant picture is decoded in the decoding apparatus every fixed period of time T, the stored amount of information in the buffer memory is decreased by the extent corresponding to the coded amount of information (namely the amount of coded codes) that corresponds to the picture that is decoded every fixed period of time T.

Incidentally, in the case of, for example, the material for a cinema, there are cases where the displaying period of time per static picture image included therein does not become constant. Even in that case, the algorithm shown in FIG. 1 can be applied by predicting the display intervals between the picture images.

And, the empty memory space, or the storable amount of memory space, changes as follows as each of the respective picture images goes on being decoded. Here, the "n" represents the number of static picture images (i.e. the absolute number of picture images) as counted from the foremost static picture image of a coded moving picture while the i represents the relative number of static picture images as counted after from the "n"th static picture image.

That is to say, when decoding the "i"th picture image as counted after from the "n"th picture image as counted after from the foremost static picture image of the coded moving picture, at a time immediately after that decoding picture image has been output from the buffer memory, the empty memory space thereof becomes an after-decoding empty memory space Sn(i)2. Thereafter, as the next picture image is supplied to the buffer memory, the stored amount of information increases at a prescribed output rate R during the prescribed period of time T with the result that the before-decoding empty memory space Sn(i+1) decreases. When an (i+1)th picture is decoded next, at a time after that decoding picture image has been output from the buffer memory, the empty memory space again decreases down to the after-decoding empty memory space Sn(i+1)2. And, thereafter, those increases and decreases are repeatedly performed as the respective picture images go on being decoded.

As a result of the operations above, in the present invention, the following simulation and setting of the quantizing step Qn(i) are performed. Namely, the empty memory spaces within the buffer memory from the time tn that prevails when the picture images from the foremost static picture image of the moving picture to the "n"th picture image are coded, up to a picture image that falls upon an mth picture image up to that an "m" number of picture images is preset from that time tn are respectively predicted. And, even when those picture images are input to and output from the buffer memory, there is simulated the empty memory space in the buffer memory from the time tn at which to code the "n"th static picture image as counted after from the foremost static picture image of the moving picture to the time at which to code the "i"th picture image thereafter, so that the before-decoding empty memory space in the buffer memory may become greater than zero, i.e. so that the following equation [1] may be established.

[Equation 1]

$$Sn(i) \geq 0 \ (1 \leq i \leq m)$$

Thereby, there is performed setting of the value of the quantizing step Qn(i) when coding the "i"th picture image as counted after therefrom.

Namely, more specifically, assuming now that X(i) represents the value of the complexity information of the

"i"th ($1 \leq i \leq m$) picture image as counted after from the time tn at which to code the "n"th picture image as counted after from the foremost static picture image of the moving picture to be coded; and Qn(i) represents the quantizing step that is to be set, then, since as stated previously the coded amount of information that is output when having coded the static picture image whose complexity information has a value of X by means of the quantizing step Q is X/Q, the following relationship in general holds true between the before-decoding empty memory space Sn(i) and the after-decoding empty memory space Sn(i)2.

[Equation 2]

$$Sn(i)2 = Sn(i)+X(i)/Q(i)$$

On the other hand, during the period of time in which there is performed coding of the "i"th picture image, the empty memory space in the buffer memory decreases by R X T due to the inputting of the (i+1)th picture image with respect' to the buffer memory. Therefore, the following relationship results:

[Equation 3]

$$Sn(i+1) = Sn(i)2 - R \times T \ (0 \leq i \leq m-1)$$

Accordingly,

[Equation 4]

$$Sn(i+1) = Sn(i)+X(i)/Qn(i)-R \times T$$

$$= Sn(0)+ (k=0 \ to \ i) \Sigma \ X(k)/Qn(i)-R \times T \times (i+1) \ (0 \leq i \leq m-1)$$

Accordingly the conditions for the quantizing step Qn(i) that are necessary for satisfying the equation (1) above are as follows.

[Equation 5]

$$Qn(i) \leq (k=0 \ to \ i )Z \ X(k)/\{R \times T \times (i+1)-Sn(0)\}$$

Namely, even when, using this Qn(i), the static picture images from the "n"th static picture image as counted after from the foremost static picture image up to the "i"th static picture image as counted thereafter have been coded, when the picture image that has been prepared by coding that "i"th static picture image has been input to the buffer memory, it can be predicted that that buffer memory will not overflow.

In other words, when performing the process for determining the quantizing step Qn(i) regarding each i that has a value of ($0 \leq i \leq m - 1$) and thereby determining the quantizing step Qn(i) ($0 \leq i \leq m - 1$), it results that that quantizing step Qn(i), when having coded the picture images produced from the "n"th static picture image as counted after from the foremost picture image of the original picture to the "i"th static picture image, is the one that when the picture image corresponding to the coding of the "i"th static picture image has been input prevents the buffer memory from overflowing.

More specifically, in general, when making small the quantizing step, the coded amount of picture information that is obtained as a result of the coding becomes increased. Accordingly, looking this from the standpoint of decoding the picture, in the decoding of it, the picture that has a large coded amount of information as a result of being quantized using a small value of quantizing step is output at one time from the buffer memory. Therefore, the smaller the value of the quantizing step, the more the amount of information of the quantized picture that has been quantized using that quantizing step, and, after that picture has been output, the more increased the empty memory space of the buffer memory. It can be said from this that even when a static picture image is coded using a smaller value of quantizing step than the above-described quantizing step Qn(i), when decoding from the picture corresponding to the "n"th static picture image as counted after from the foremost static picture image of the moving picture to be coded to the picture corresponding to the "i"th static picture image as counted thereafter, it becomes impossible that overflow will occur in the buffer memory.

For this reason, assuming that the Qn be the minimum value of all the values of the above-described quantizing step Qn(i), when having performed, using that quantizing step Qn, coding of the picture from the "n"th static picture image from the foremost static picture image of the moving picture to be coded to the "i"th static picture image, at the time of decoding those codes, it becomes possible to anticipate that the buffer memory will not overflow.

(II) Embodiment

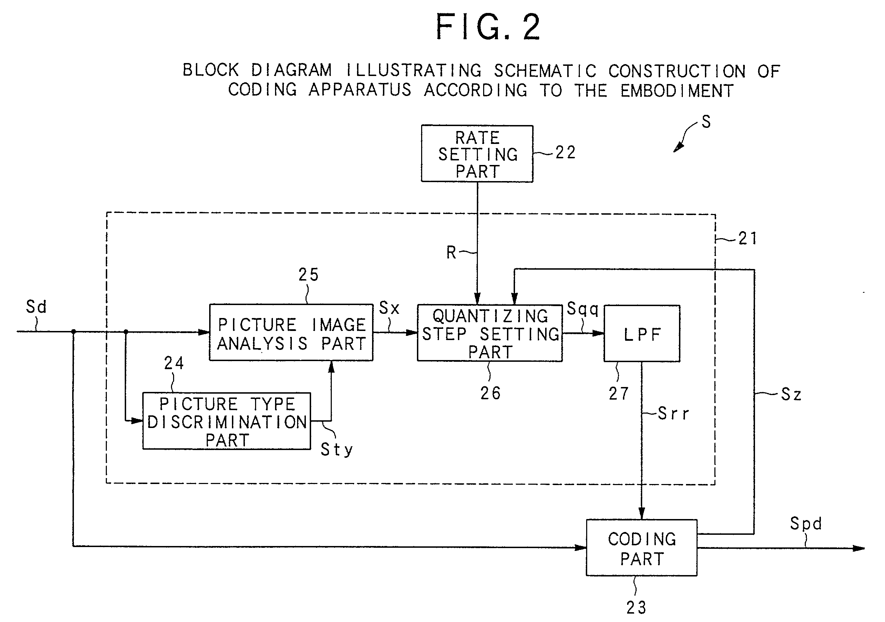

Next, an embodiment that stands on the above-described principle will be explained using FIGS. 2 to 4.

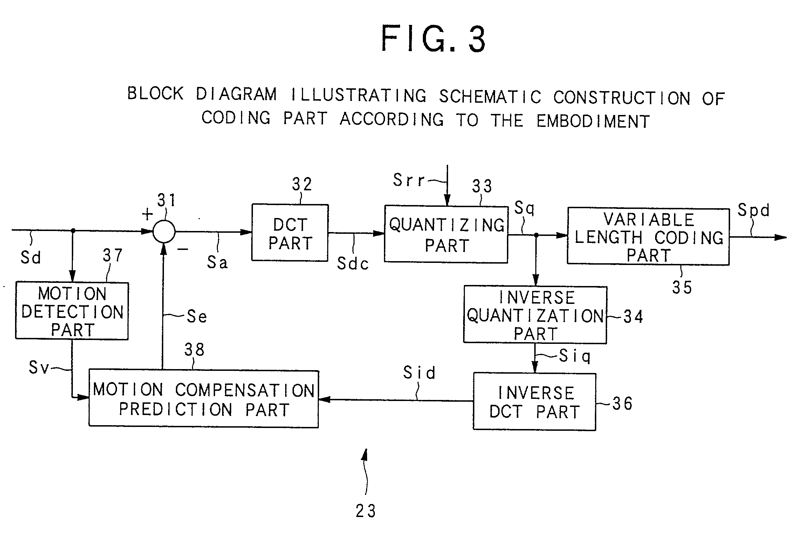

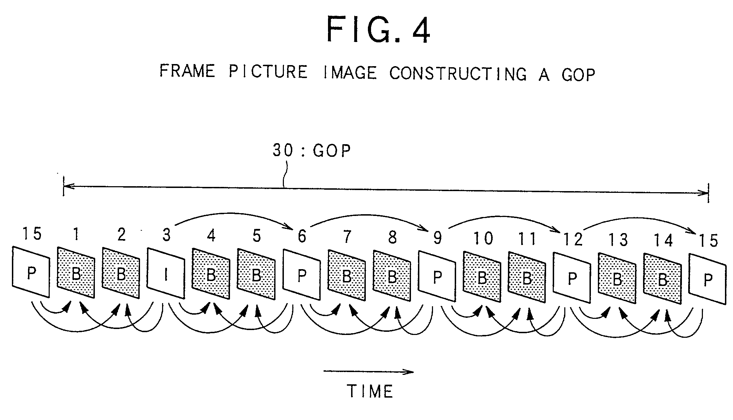

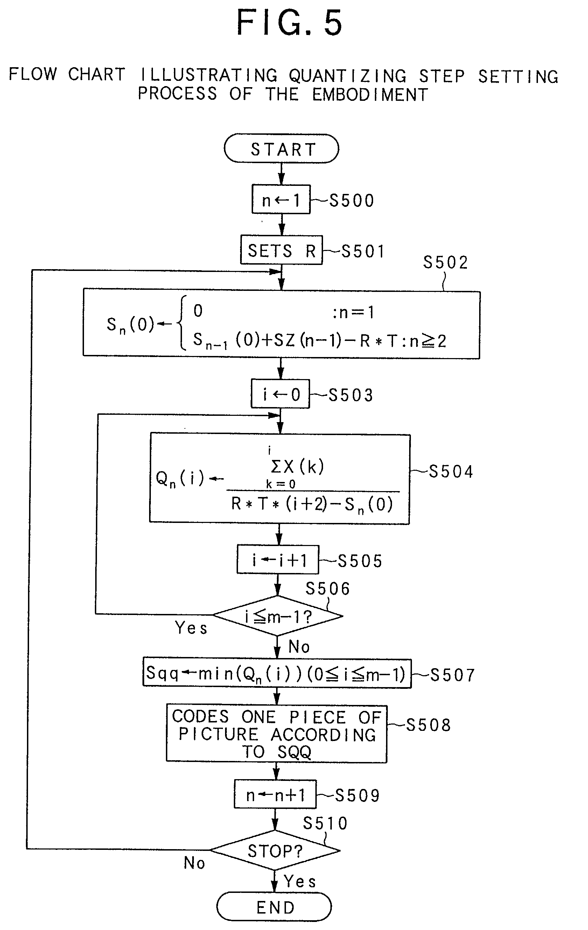

Incidentally, FIG. 2 is a block diagram illustrating the schematic construction of a coding apparatus according to this embodiment; FIG. 3 is a block diagram illustrating the schematic construction of an example of a coding part according to this embodiment; FIG. 4 is a typical view illustrating the construction of a GOP; and FIG. 5 is a flow chart illustrating setting process for a quantizing step Q according to this embodiment.

As illustrated in FIG. 2, the coding apparatus S of this embodiment is constructed of a rate control part 21, a rate setting part 22, and a coding part 23.

Further, the rate control part 21 is constructed of a picture image type discriminating part 24, a picture image analysis part 25, a quantizing step setting part 26, and an LPF (Low Pass Filter) 27 that serves as a suppression device.

Also, as illustrated in FIG. 3, the coding part 23 for performing compression coding of a moving picture according to the MPEG2 standard specification is constructed of an adder 31, a DCT (Discrete Cosine Transform) part 32, a quantizing part 33 serving as a quantizing device, an inverse quantizing part 34, a variable length coding part 35 serving as a coding device, an inverse DCT part 36, a motion detecting part 37, and a motion compensation prediction part 38.

Next, the entire operation of the coding apparatus S will be explained using FIG. 2.

As illustrated in FIG. 2, a digital information signal Sd input to the coding apparatus S from outside it (the picture image information that is included in the digital information signal Sd is constructed of a plurality of static picture images and is digitized every one of the pixels constituting each static picture image) is input to the coding part 23 and to the rate control part 21.

And, the coding part 23 outputs a compression information signal Spd that is prepared by performing compression coding of the digital information signal Sd according to the MPEG2 method, to the outside, according to the rate signal Srr that is output from the rate control part 21 as later described. At the same time, the coding part 23 outputs a coded-amount-of-information signal Sz that indicates a coded amount of information (a coded amount of information Sz("n") as later described) of the picture that has been coded.

Next, the quantizing step setting process of the present invention in the rate control part 21 will be explained using FIGS. 3 to 5.

First, prior to actually explaining the quantizing step setting process, an explanation will be given, using FIG. 4, of the outline of the information unit called "GOP" in the compression information signal Spd that is prepared by performing compression coding of the digital information signal Sd with the MPEG2 method. It is to be noted that FIG. 4 illustrates an example of a plurality of pictures constituting one GOP.

In FIG. 4, there is illustrated a case where one GOP 30 is constituted by 15 pieces of picture (converted to approximately 0. 5 second in terms of the reproduction time duration). (That number of picture pieces is the one as viewed in principle and, in the MPEG2 method, the number of picture pieces included in one GOP 30 is not constant). Of those pieces of picture, the picture that is indicated by the symbol "I" is called an "I picture (Intra-coded Picture: Intra-coded picture)" and means a picture that can reproduce a complete static picture image only with its own picture image.

Also, the picture that is shown by the symbol "P" is called "a P picture (Predictive-coded Picture :)" and that picture is a predictive picture image that is produced by, for example, decoding the difference between itself and a predictive picture image that has been compensated and reproduced according to the already decoded I picture or other P picture.

Further, the picture that is shown by the symbol "B" is called "a B picture (Bidirectionally predictive Picture :)" and that picture is a predictive picture that is reproduced by using not only the I picture or P picture that precedes in terms of time but also the I picture or P picture that succeeds in terms of time for making a prediction.

Here, in the MPEG2 method, there is adopted a variable length rate coding method as well that handles the GOPs 30 the amounts of data included in which are not fixed as stated above.

Namely, in a case where the respective pictures included in one GOP 30 correspond to a moving picture the motion of that is speedy and the correlation between the respective pictures is small, the amount of data constituting each picture becomes increased and accordingly the amount of data in one GOP 30 also becomes increased.

On the other hand, in a case where the respective pictures included in one GOP 30 correspond to a moving picture the motion of that is not active very much and the correlation between the respective pictures is large, the amount of data constituting each picture becomes decreased with the result that the amount of data included in one GOP 30 also becomes decreased.

Next, the coding rate control of the present invention will be explained in detail with reference to FIGS. 2 to 5.

First, as illustrated in FIG. 2, the digital information signal Sd that has been input to the rate control part 21 is output to the picture image type discrimination part 24 and to the picture image analysis part 25.

And, the picture image type discrimination part 24 determines which type of the above-described I picture, P picture, and B picture the static picture image in the digital information signal Sd that is in a state of being input at that time corresponds to. The discrimination part 24 thereby produces a discrimination signal Sty that indicates that determined result and outputs it to the picture image analysis part 25.

As a result of this, the picture image analysis part 25 detects the complexity of each static picture image that is in a state of being input at that time every type of the static picture images according to the discrimination signal Sty. The analysis part 25 then produces a complexity signal Sx that contains the complexity information that indicates the complexity of every picture type that has been detected. It then outputs it to the quantizing step setting part 26.

On the other hand, in parallel with the above-described operations, the rate setting part 22 outputs a coding rate signal R indicating a coding rate the user has set to the quantizing step setting part 26. It is to be noted that that coding rate signal R has the same value as that of the decoding rate that is used when simulating the empty memory space of the buffer memory within the decoding apparatus.

And, the quantizing step setting part 26, according to the coding rate signal R and the complexity signal Sx, executes quantizing step setting process of this embodiment as later described to thereby produce a quantizing step signal Sqq and output it to the LPF 27.

As a result of this, the LPF 27 suppresses the change in value of the quantizing step Q so that the value of the quantizing step Q included in the quantizing step signal Sqq does not rapidly change more greatly than a present range. It thereby produces the rate signal Srr that contains therein the quantizing step Q having the suppressed value and then outputs that rate signal Srr to the coding part 23.

Next, the coding process for each static picture image that contains therein the above-described quantizing step setting process of this embodiment will be explained using FIG. 5.

Incidentally, in the coding process illustrated in FIG. 5, of a plurality of static picture images that are input at, and after, the time tn when there is performed coding of the "n"th static picture image as counted after from the foremost static picture image of a moving picture that is to be coded, an "m" number of static picture images (e.g. 15 pieces of picture that correspond to all static picture images included in one GOP 30) are handled as the object. With that number "m" being handled as the object, there is set the quantizing step Qn at the time tn when there is performed coding of the "n"th static picture image as counted after from the foremost static picture image of the moving picture to be coded.

As illustrated in FIG. 5, in the coding process containing therein the quantizing step setting process, there is initialized the above-described parameter "n" that represents the absolute number of pieces of the static picture images as counted after from the foremost static picture image of the moving picture to be coded (step S500). Next, there is set the coding rate signal R that indicates the coding rate that has been set by the user (step S501).

Next, there is set the before-decoding empty memory space Sn(0) of the buffer memory at a time immediately before the outputting (i.e. coding) from the buffer memory, at the stage of simulation, of the "n"th static picture image that is going to be coded at the time tn when there is coded the "n"th static picture image as counted after from the foremost static picture image of the moving picture to be coded.

At that time, regarding the process executed in the step S502, more concretely, when the parameter "n" is "1" (i.e. when coding the foremost static picture image of the moving picture to be coded), the empty memory space Si(0) within the buffer memory of the decoding apparatus is set to be zero. That is to say, in the case of a static picture image included in the foremost data of the moving picture to be coded, in the simulation of the decoding process, decoding is started at the point in time when the buffer on the decoding-apparatus side has become full of data, or data-full, (the empty memory space has become zero).

Here, regarding starting the decoding at the point in time when the buffer memory on the decoding-apparatus side has become data-full, the following can be said. Generally, when simulating the stored amount of data of the buffer memory at the time of decoding, there are needed the following. A maximum value of the buffer memory; the input rate with respect to the buffer memory (that value becomes equal to, for example, the coding rate signal R); the coded amount of information of each picture and the reproduction time duration; and the stored amount of data of the buffer memory at the time of the point in time when there is started decoding of an initial picture.

At this time, the maximum value of the buffer memory is set beforehand every type of the decoding apparatus, and the input rate is determined as having a single fixed value by the user. Further, the reproduction time duration of each picture is determined depending upon the static picture images at the time of their being coded.

And, regarding the stored amount of data of the buffer memory at the point in time when the initial picture that has remained starts to be decoded, when the stored amount of data of the buffer memory at the time of the decoding being started has become maximum (namely, the empty memory space of the buffer memory has become zero), generally, the initial picture is decoded. Therefore, in the simulation of this embodiment, as stated above, when the buffer on the decoding-apparatus side has become data-full, it is arranged that decoding be started.

On the other hand, when the parameter "n" is equal to or more than "2", the empty memory space increases, relative to the empty memory space $Sn-1(0)$ that is immediately before the coded data of the picture that has been decoded one before is decoded (for example, in the case of decoding the 2nd piece picture, the number of pieces = 2, the empty memory space that prevails immediately before decoding [outputting from the buffer memory] the 1st piece, "n"=1), by that picture that is one before being decoded (namely by the picture [whose coded amount of information is assumed to be $Sz("n"-1)$ ] that is one before and that is already coded and is in a state of being input in the buffer memory being output from the buffer memory). Therefore, a value corresponding to that increased empty memory space is added to the previous empty memory space. And a value, that is obtained by subtracting from that added value the amount of information R x T (see FIG. 1) of the picture that is supplied to the buffer memory by the point in time that is immediately before the picture going to be decoded from now onward starts to be decoded, is set as the empty memory space $Sn(0)$ that prevails immediately before that decoding.

Next, in the setting of the quantizing step that is used for quantization at the time tn at which to code the "n"th static picture image as counted after from the foremost static picture image of the moving picture that is to be coded, there is initialized (step S503) the parameter i indicating the relative picture images number, as counted after from the time tn, of the static picture images whose amounts of coded codes are predicted (i.e. the one which is coded from that initial static picture image and further decoded in the future).

And, in order that the before-decoding empty memory space $Sn(i)$ of the buffer memory at a time immediately before the picture that is decoded for the "i"th time after the time tn is decoded may be zero regarding every i (see the equation 1 above), according to a case where the equation 4 above is established at its equality, there is determined the quantizing step $Qn(i)$ for performing coding of the static picture images until the "i"th static picture piece as counted after from the time tn. Then, that determined quantizing step $Qn(i)$ is temporarily stored in a memory not illustrated of the quantizing step setting part 26 every parameter i (step S504).

Next, the parameter i is incremented by 1 (step S505) in order to execute the process of step S504 with respect to the next static picture image to be predicted. Further, it is determined (step S506) whether the value of the parameter i is (m-1).

And, when in the determination of step S506 the value of the parameter i is less than (m-1) (step S506: YES), the flow returns to the step S504 so as to execute the step S504 process with respect to the parameter i that has its value incremented (step S505). On the other hand, if the value of the incremented parameter is not less than (m-1) (step S506: NO), the value of the quantilizing step Q(i) having the smallest value of all the values of the quantizing step Q(i) that through the repetition of the above-described processes are stored in the not illustrated memory is output as the quantizing step signal Sqq to the LPF 27 (step S507).

That is, by the above-described processes from step S504 to step S506 being repeated times that correspond to the i number of pieces as counted after from the time Tn (more specifically for example 15 pieces corresponding to one GOP), there are calculated, quantizing steps Q, as a result of having simulated the amounts of coded codes in the respective pictures that correspond to the i number of pieces and that plan to be output from the buffer memory after the time tn. And the smallest value of those quantizing step Q values is output as the quantizing step signal Sqq to the LPF 27.

Incidentally, the reason why the minimum value of the quantizing step Q values calculated in the step S507 is used as the quantizing step signal Sqq is, regarding the pictures whose all static picture images from the time tn to the "m" number of pieces have been coded, to guarantee that the buffer memory will not overflow. That reason further is that, the smaller the value of the quantizing step Q, the more improved the quality of the picture image after it is coded, and that, therefore, the minimum quantizing step Q value if it satisfies the equation 1 above is output as the quantizing step signal Sqq.

And the picture to be coded is coded in the coding part 23 as described later by using the quantizing step Q value included in the quantizing step signal Sqq, and then is output to the outside (step S508).

Here, to explain in more detail about the process corresponding to the flow chart of FIG. 5 including that step S508, first, the process that accords with the flow chart illustrated in FIG. 5 is once executed, each time one piece of static picture image is coded, so as to determine the quantilizing step needed for that coding.

More specifically, for example, when coding the foremost static picture image ("n"=1) of the moving picture that is going to be coded, the quantizing step is determined as follows. Namely, even when coding 15 pieces of static picture image from "n"=1 to "n"=15 according to the process corresponding to the flow chart illustrated in FIG. 5, there is determined the quantizing step that when decoding the pictures obtained by that coding prevents the buffer memory from overflowing. Using that determined quantizing step, only the foremost static picture image is coded in the coding part 23. At this time, the amount of coded codes of the picture that is obtained by actual coding becomes Sz(1).

Next, when coding the 2nd static picture image, there is calculated in the same way as above the quantizing step that even when coding 15 pieces of static picture image from "n"=2 to "n"=16 prevents the buffer memory from overflowing when decoding the pictures obtained by that coding. And, using the newly determined quantizing step, the 2nd static picture image is coded. Thereafter, similarly, there is simulated the change in the stored amount of information in the buffer memory that occurs when further decoding the data obtained by coding the static picture images that include one from the static picture image going to be coded to the static picture images that include that starting static picture image and that are 15 pieces afterward from that starting static picture image. Thereby, there is always calculated the quantizing step that prevents the buffer memory from overflowing. And, using that quantizing step, there are coded the static picture images that are going to be coded.

Thereafter, the parameter "n" is incremented by 1 (step S509) so as to execute the from step S502 to step S508 processes with respect to the static picture image to be coded next. Then, it is confirmed whether all the static picture images have actually finished being coded (step S510: NO), the flow returns to step S502 so as to subsequently execute the above-described series of coding processes. On the other hand, when the coding process has been completed with respect to all the pictures (step S510: YES) there is terminated the coding process that includes the series of quantizing step setting processes.

Next, the operation of the coding part 23 that executes the process in step S508 in FIG. 5 will be explained using FIG. 3.

As illustrated in FIG. 3, in the coding part 23, the digital information signal Sd that has been input thereto is output to the motion detection part 37 and to the adder 31.

And, in the motion detection part 37, regarding each static picture image included in the digital information signal Sd, the so-called "motion vector" that is based on the use of the MPEG2 method is calculated, whereby a corresponding vector signal Sv is output to the motion compensation prediction part 38.

Here, explaining in detail about the motion vector, it is the one that is used for motion compensation process that is executed at the time of the compression of a moving picture performed according to the MPEG2 method.

Namely, in the motion compensation process, first, the static picture image going to be coded is divided into the above-described macro-blocks each of that contains a preset prescribed number of pixels. Then, there is determined the absolute value of the difference between each pixel within each macro-block and a corresponding pixel within either a static picture image before or a static picture image after the former static picture image, that is located on the time axis. Those absolute values are added together regarding every pixel within the relevant macro-block to thereby determine a spatial position of a picture image wherein the sum of those absolute values becomes minimum (namely the picture image that is the nearest to the picture image within that relevant macro-block and that is located within the static picture image before or after that former static picture image.

And, the spacing relationship between the macro-block and the picture image that is the nearest to it is determined to be the above-described motion vector. And that motion vector is coded as the information that represents the picture image within either one frame before, or one frame after, the relevant static picture image. Accordingly, compared to the case of coding the picture image information itself as it is, the amount of information that is actually coded can be compressed in an amount that is considerable, to thereby perform coding of that picture image information.

Next, the digital information signal Sd that has been output to the adder 31 has subtracted therefrom in the adder 31 a compensation signal Se supplied from the motion compensation prediction part 38, whereby the resulting signal is output to the DCT part 32 as a subtraction signal Sa.

Next, the DCT part 32 performs DCT (Discrete Cosine Transform) for compressing the amount of information with respect to the subtraction signal Sa and outputs the resulting signal to the quantizing part 33 as a conversion signal Sdc.

And, the quantizing part 33 quantizes the conversion signal Sdc by the use of the quantizing step that is indicated by the rate signal Srr, and thereby produces a quantization signal Sq and outputs it to the variable length coding part 35 and to the inverse quantization part 34.

Next, the inverse quantization part 34 performs inverse quantization with respect to the quantization signal Sq to thereby produce an inverse quantization signal Siq and outputs it to the inverse DCT part 36.

And, the inverse DCT part 36 performs inverse DCT (inverse discrete cosine transform) with respect to the inverse quantization signal Siq and outputs the resulting signal to the motion compensation prediction part 38 as an inverse conversion signal Sid.

Thereafter, the motion compensation prediction part 38, according to the motion vector included in the above-described vector signal Sv and the inverse conversion signal Sid, performs motion compensation processing by the use of the so-called "between-frame prediction" based on the MPEG2 method. It thereby produces the compensation signal Se for compressing the amount of information and outputs it to the adder 31.

On the other hand, the variable length coding part 35 performs variable length coding with respect to the quantization signal Sq and outputs the compression information signal Spd, which is a signal that has been prepared by performing compression and coding of the input digital information signal Sd with the MPEG2 method, to the rate control part 21 and to the outside.

Through the above-described operations, the rate control part 21 operates according to the compression information signal Spd, the digital information signal Sd, and the coding rate signal R (whose value is equal to the rate for decoding) as follows. Namely, it produces the rate signal Srr for optimizing the quantizing step (in other words the coding rate in the compression information signal Spd) that is used for quantization performed in the quantizing part 33 as described above, and then outputs it to the quantizing part 33.

As explained above, according to the operation of the coding apparatus S of this embodiment, unlike the way of dividing the moving picture into picture image group units constructed of static picture images, representing a plurality of pictures, which are preset by coding process, and of allocating an amount of information, used for coding, to each of those divided picture image group units, there is adopted the way of forming a picture image group at all time by a prescribed number of static picture images that are going to be counted after in terms of time from a static picture image going to be coded and of setting an amount of information for coding with respect to within each that formed picture image group. As a result of this, the static picture images included in the picture image group are always updated. Therefore, it is not necessary, while considering the allocation of an amount of coded information with respect to the static picture image that is coded the last in the picture image group that has been formed, to determine the amounts of coded information of the respective picture images that precede up to the point in time corresponding to that static picture image.

In other words, by simulating a minimum value of the empty amount of memory spaces in the buffer memory that are obtained not only when an initial static picture image is coded but also when a static picture image as counted a plurality of pieces afterward from that initial static picture image is coded, that buffer memory can be prevented from overflowing and at the same time it is possible to suppress deterioration in the quality of after-coding image as a result of the deficiency in the amount of coded information.

Also, since the method of the embodiment sets the quantizing step Q for one quantization so that the minimum value of the before-decoding empty memory space Sn(i) in the buffer memory may be zero, the moving picture that has been coded can be output without interruption.

Also, since the embodiment method predicts the before-decoding empty memory space Sn(i) in the buffer memory toward the future and sets the quantizing step so that the predicted result may be at all times zero or more, it is possible to reliably prevent the outputting of the coded moving picture from being interrupted.

Further, since the embodiment method predicts the before-decoding empty memory space Sn(i) in the buffer memory and sets the quantizing step so that the predicted result may be at all times zero or more, it is possible to reliably prevent the output interruption that may occur when coding the moving picture constructed of static picture images. In addition, it is also possible to set the quantizing step so that the buffer memory may be efficiently taken advantage of. Especially, through setting the quantizing step so that the minimum value of the simulated empty memory space Sn(i) may be zero, it becomes possible, for preparation for cases where static picture images of complex structure have been input with no sign of that, to ensure the empty memory space as much as possible in the buffer memory.

Further, also, since predicting the before-decoding empty memory space Sn(i) according to the complexity information X and the output rate R (see FIG. 1), it is possible to predict the before-decoding empty memory space Sn(i) simply and accurately and set the quantizing step according to that prediction.

Further, since, regarding the set quantizing step, the amount of fluctuation in it is suppressed by the LPF 27, extreme fluctuation in the amount of after-coding coded information is suppressed. As a result of this, it is possible to execute coding while decreasing the turbulence of the reproduced images.

(III) <u>Modification</u>

Next, a modification of the present invention will be explained.

In the above-described embodiment, an explanation has been given of the case where the present invention has been applied to the coding apparatus based on the CBR method, in which the output rate from the buffer memory is fixed. However, other than this, the present invention can also be similarly applied to the coding apparatus based on the VBR method.

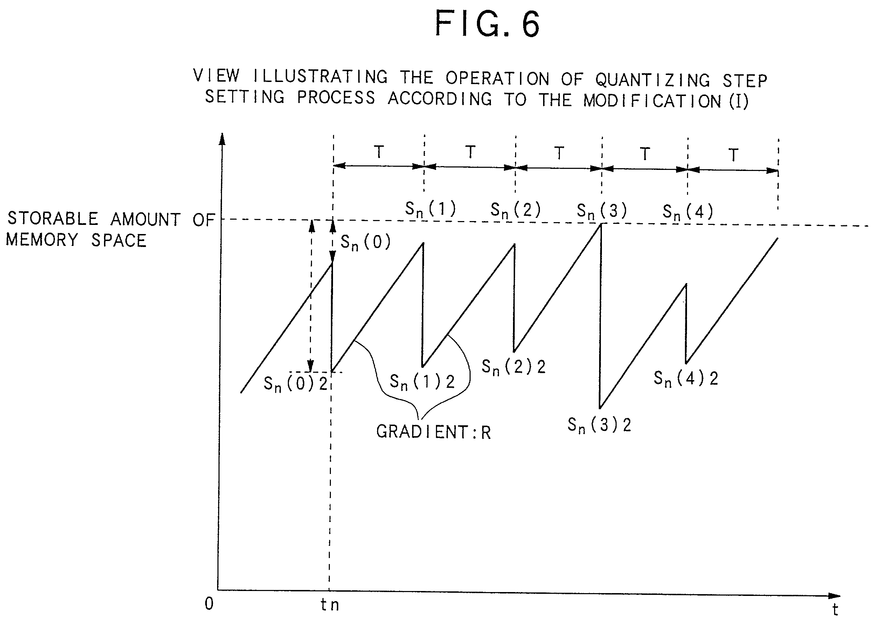

Therefore, next, an explanation will be given, using FIGS. 6 to 8, of the quantizing step setting process in the rate control part in the case where the present invention has been applied to the coding apparatus with the VBR method used therein.

Incidentally, since the construction of the coding apparatus used in this modification is completely the same as that of the coding apparatus according to the above-described embodiment, the explanation that will be made below employs the parts numbers that are used in FIG. 2 or 3.

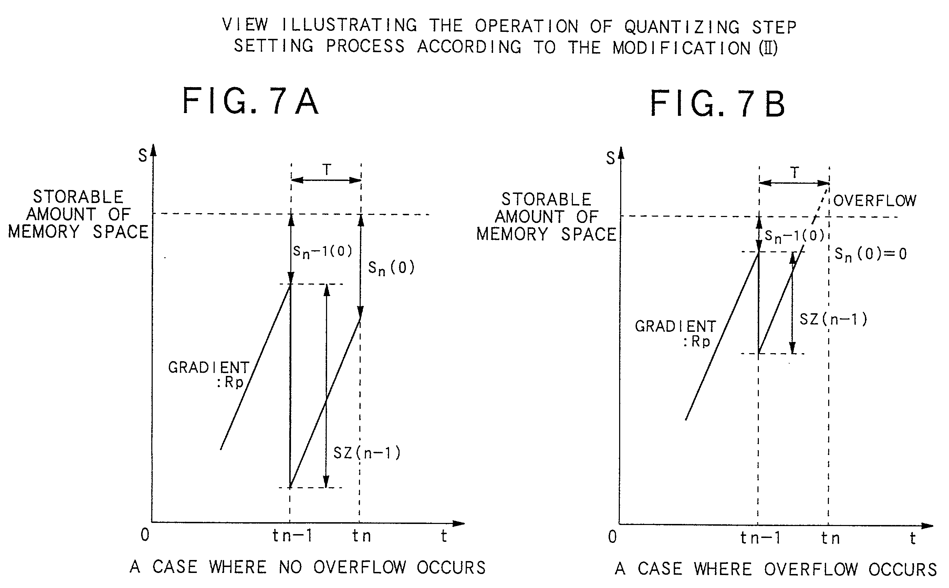

Generally, in the case of the coding process with the VBR method used therein, during the coding, the bit rate at all times varies. However, in the simulation of the buffer memory of the decoding apparatus, as illustrated in FIG. 7A or 7B, simulation such as that described above is performed under the assumption that the moving picture that has been converted into codes be at all times input to the buffer memory at a peak rate Rp that is a maximum value of the bit rates. It is to be noted that, unlike the case of the above-described CBR method, in the case of the coding process using the VBR method, it may happen that the buffer memory continues to become data-full (i.e. a state where the before-decoding empty memory space Sn(i) becomes zero).

First, in this modification, as illustrated in FIG. 6, simulation is performed, using an instantaneous bit rate R $(R \leq Rp)$ of a static picture image going to be coded, on the premise that the coded pictures be input to the buffer memory at the bit rate R in the same way as in the case of the CBR method of the above-described embodiment. Here, that instantaneous bit rate R is determined in the rate control part 21 for example according to the complexity of the static picture image that is being coded.

That is, the modification uses the instantaneous bit rate R for the static picture image that is going to be coded, simulates, using that bit rate R, the fluctuations in the empty memory space in the buffer memory of the decoding apparatus, which occur with respect to up to the static picture image that is located a prescribed number of pieces afterward from the present static picture image, in the same way as when coding has been performed with the CBR method, thereby determines the quantizing step Q that comes when the empty memory space in the buffer memory becomes equal to or more than zero and has a minimum value, and codes the picture by using the thus-determined quantizing step Q.

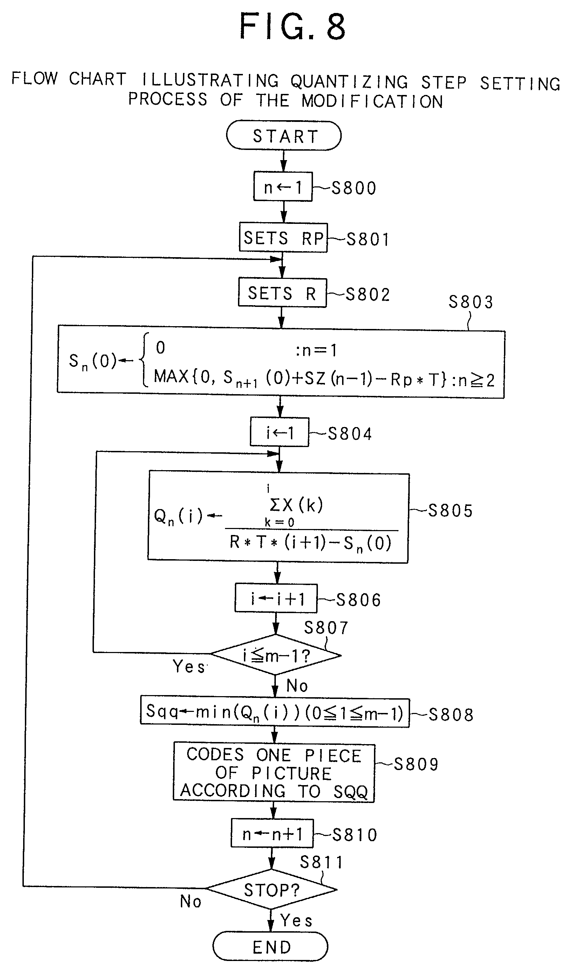

More specifically, as illustrated in FIG. 8, the modification method first initializes the above-described parameter "n" that indicates the absolute number of static picture images as counted after from the foremost static picture image of the moving picture going to be coded (step S800), and sets the above-described coding rate R and peak rate Rp (step S801 and step S802).

Next, when the parameter "n" is "1", since the empty memory space Sn(0) is zero as in the case of the step S502 in FIG. 5, the modification method sets the value to that effect. On the other hand, when the parameter "n" is "2" or more, the operation is done as follows. Namely, the operation first adds to the empty memory space Sn-1(0) for the picture that has been decoded one piece earlier the amount of coded codes Sz("n"-1) of the picture that is obtained by actually coding that one-piece-earlier static picture image, and then determines a vale obtained by subtracting from the after-addition value the amount of information Rp x T of the picture that is supplied to the buffer memory by the point in time when the static picture image going to be decoded from now onward starts to be do done, and sets a larger one of that value and zero as the before-decoding empty memory space Sn(0) that prevails at a time immediately before that decoding.

Namely, since it is not possible that the empty memory space Sn(0) (the initial value of the empty memory space in the buffer memory) in the buffer memory at the time tn at which to code the "n"th static picture image as counted after from the foremost static picture image of the moving picture going to be coded will become a negative value, even when the empty amount of memory space that has been calculated for determining the simulation has become a negative value, "0" is set as the value for that empty amount of memory space.

Here, FIG. 7A and FIG. 7B respectively illustrate the case where the empty amount of memory space that has been calculated in the relevant simulation is positive, i.e. the one where the buffer memory does not overflow and the case where the empty amount of memory space that has been calculated in the relevant simulation is negative, i. e. the one where the buffer memory overflows.

That is, in this modification, if locally seen, the operation that is performed when the VBR method is used is deemed as being the same as in the case of the CBR method. Standing on that premise, when simulating the quantizing step Q, there is simulated the fluctuation in the empty amount of memory space in the buffer memory with a relevant instantaneous bit rate R.

However, because with respect to the actual buffer memory each picture is input at its peak rate Rp, the peak rate Rp is used in the step S803 in which to calculate the empty amount of memory space in the actual buffer memory.

Next, since the from step S804 to step S811 processes that succeed the step S803 are the same as the from step S503 to step S510 processes that are performed in the above-described process of FIG. 5, the detailed explanation of those processes is omitted.

As described above, according to the operation of the coding apparatus of this modification, as in the case of the preceding embodiment, a static picture image group is formed at all times by a prescribed number of a plurality of static picture images that are coded after in terms of time from a static picture image going to be coded. And an amount of information for coding is set with respect to within that formed static picture image group. Therefore, as a result of this, the static picture images included within the static picture image group go on being at all times updated. Therefore, it is not necessary, while considering the allocation of an amount of coded information with respect to the static picture image going to be coded the last in the picture image group that has already been formed, to determine the amount of coded information with respect to each of the preceding pictures from that last picture.

Also, in each of the above-described embodiment and modification, the explanation has been given of the case where the present invention is applied to the coding apparatus S in which to code a moving picture according to the MPEG2 method. Other than this, the present invention can be widely applied to the cases where a moving picture is coded according to the coding method wherein each relevant static picture image is independently coded.

Further, if having recorded in an information recording medium such as a flexible disk, a hard disk, or a semiconductor memory a program corresponding to the flow chart illustrated in FIG. 5 or 8 and a program for realizing the function that works as the LPF does, and if reading that out by a general-purpose microcomputer or the like and causing it to be executed by it, it is also possible to cause that microcomputer to function as the quantizing step setting part 26 of the embodiment.

Accordingly, since, regarding the quantizing unit that has been set, there is suppressed the amount of fluctuation in each of a plurality of the consecutive quantizing units, it results that extreme fluctuation in the amount of coded information after coding is suppressed. It is thereby possible to execute coding while decreasing the turbulence of the reproduced image.

Therefore, it is possible to suppress the amount of fluctuation in the quantizing unit with a simple construction.

Furthermore, it is possible to code the moving picture while suppressing the turbulence of the reproduced image that has been reproduced from the coded moving picture.

**Claims**

1. A quantizing unit setting apparatus(S) for setting a quantizing unit that is used for quantizing process in coding a moving picture, **characterized in that** the apparatus comprises:

   a suppressing device(27) for suppressing the amount of fluctuation in a plurality of consecutive quantizing units and;
   an outputting device(23) for outputting a suppressed quantizing unit.

2. The quantizing unit setting apparatus(S) according to claim 1, wherein the suppressing device (27)is a low pass filter.

3. A coding apparatus, **characterized in that** the apparatus comprises:

   the quantizing unit setting apparatus(S) incliding
   a suppressing device(27) for suppressing the amount of fluctuation in a plurality of consecutive quantizing units and
   an outputting device(23) for outputting a suppressed quantizing unit;
   a quantizing device(33) for quantizing of the moving picture using the suppressed quantizing unit;
   a producing device(23) for producing a quantized moving picture; and
   a coding device(23) for coding the quantized moving picture.

4. A quantizing unit setting method(S) for setting a quantizing unit that is used for quantizing process in coding a moving picture, **characterized in that** the method comprises the processes of:

   suppressing(27) the amount of fluctuation in a plurality of consecutive quantizing units; and
   outputting(23) a suppressed quantizing unit.

5. The quantizing unit setting method(S) according to claim 4, wherein the fluctuation is suppressed by using a low pass(27) filter in the suppressing process.

6. A coding method, **characterized in that** the method comprises the processes of:

   setting the quantizing unit(S), the setting process including
   suppressing(27) the amount of fluctuation in a plurality of consecutive quantizing units and
   outputting(23) a suppressed quantizing unit;
   quantizing the moving picture(33) using the suppressed quantizing unit;
   producing(23) a quantized moving picture; and
   coding(23) the quantized moving picture.

7. An information recording medium, on which a setting a quantizing unit program recorded readable by a computer that is included in a quantizing unit setting apparatus for setting a quantizing unit that is used for quantizing process in coding a moving picture, **characterized in that** the medium causes the computer to function as;
   a suppressing device(27) for suppressing the amount of fluctuation in a plurality of consecutive quantizing units; and

an outputting device(23) for outputting a suppressed quantizing unit.

**8.** The information recording medium according to claim 7, on which the quantizing unit program recorded readable by a computer, causes the computer to function as;

the suppressing device(27) is a low pass filter.

**9.** The information recording medium, on which a setting the quantizing unit program(S) according to claim 7 or 8, recorded readable by a computer included in the coding apparatus, causes the computer to function as;

a quantizing device(33) for quantizing the moving picture using the suppressed quantizing unit; and

a producing device(23) for producing a quantized moving picture.

**10.** A quantizing unit setting program(S) embodied on computer-readable medium for setting a quantizing unit that is used for quantizing process in coding a moving picture, **characterized by** causing a computer to function as,

a suppressing device(27) for suppressing the amount of fluctuation in a plurality of consecutive quantizing units; and

an outputting device(23) for outputting a suppressed quantizing unit.

**11.** The quantizing unit setting program(S) according to claim 10 embodied on computer-readable medium, wherein the suppressing device(27) functions as a low pass filter.

# FIG. 1

## PRINCIPLE OF THE PRESENT INVENTION

STORABLE AMOUNT OF MEMORY SPACE

$S_n(0)$  $S_n(1)$  $S_n(2)$  $S_n(3)$  $S_n(4)$

$S_n(0)2$  $S_n(1)2$  $S_n(2)2$  $S_n(3)2$  $S_n(4)2$

GRADIENT : R

$t_n$

EP 1 263 237 A2

# FIG. 2

BLOCK DIAGRAM ILLUSTRATING SCHEMATIC CONSTRUCTION OF
CODING APPARATUS ACCORDING TO THE EMBODIMENT

EP 1 263 237 A2

# FIG. 3

BLOCK DIAGRAM ILLUSTRATING SCHEMATIC CONSTRUCTION OF
CODING PART ACCORDING TO THE EMBODIMENT

EP 1 263 237 A2

# FIG. 4

FRAME PICTURE IMAGE CONSTRUCTING A GOP

30 : GOP

| 15 | 1 | 2 | 3 | 4 | 5 | 6 | 7 | 8 | 9 | 10 | 11 | 12 | 13 | 14 | 15 |
| P | B | B | I | B | B | P | B | B | P | B | B | P | B | B | P |

TIME

EP 1 263 237 A2

# FIG. 5

FLOW CHART ILLUSTRATING QUANTIZING STEP SETTING
PROCESS OF THE EMBODIMENT

```
                    ┌─────────┐
                    │  START  │
                    └────┬────┘
                         │
                   ┌─────────┐
                   │  n ← 1  │──S500
                   └────┬────┘
                         │
                   ┌─────────┐
                   │ SETS R  │──S501
                   └────┬────┘
```

$$S_n(0) \leftarrow \begin{cases} 0 & : n = 1 \\ S_{n-1}(0) + SZ(n-1) - R*T & : n \geq 2 \end{cases} \quad \text{S502}$$

$$i \leftarrow 0 \quad \text{S503}$$

$$Q_n(i) \leftarrow \frac{\displaystyle\sum_{k=0}^{i} X(k)}{R*T*(i+2) - S_n(0)} \quad \text{S504}$$

$$i \leftarrow i+1 \quad \text{S505}$$

S506

$$i \leq m-1 ?$$

Yes / No

$$Sqq \leftarrow \min(Q_n(i))(0 \leq i \leq m-1) \quad \text{S507}$$

CODES ONE PIECE OF
PICTURE ACCORDING
TO SQQ ── S508

$$n \leftarrow n+1 \quad \text{S509}$$

S510

STOP?

No / Yes

END

# FIG. 6

VIEW ILLUSTRATING THE OPERATION OF QUANTIZING STEP
SETTING PROCESS ACCORDING TO THE MODIFICATION (I)

EP 1 263 237 A2

# FIG. 7A

# FIG. 7B

A CASE WHERE NO OVERFLOW OCCURS

A CASE WHERE OVERFLOW OCCURS

EP 1 263 237 A2

# FIG. 8

FLOW CHART ILLUSTRATING QUANTIZING STEP SETTING
PROCESS OF THE MODIFICATION

```
                    ( START )
                        │
                        ▼
                   ┌─────────┐
                   │ n ← 1   │──── S800
                   └─────────┘
                        │
                        ▼
                   ┌─────────┐
                   │ SETS RP │──── S801
                   └─────────┘
                        │
        ┌───────────────┤
        │               ▼
        │          ┌─────────┐                    S803
        │          │ SETS R  │──── S802
        │          └─────────┘
        │               │
        │               ▼
        │   ┌─────────────────────────────────────────────┐
        │   │         ⎧ 0                      : n = 1     │
        │   │ Sₙ(0) ← ⎨                                    │
        │   │         ⎩ MAX{0, Sₙ₊₁(0)+SZ(n−1)−Rp∗T}: n≧2  │
        │   └─────────────────────────────────────────────┘
        │               │
        │               ▼
        │          ┌─────────┐
        │          │ i ← 1   │──── S804
        │          └─────────┘
        │               │
        │   ┌───────────┤
        │   │           ▼
        │   │   ┌─────────────────────────────┐
        │   │   │              i              │
        │   │   │            ΣX(k)            │
        │   │   │            k=0             │──── S805
        │   │   │ Qₙ(i) ← ─────────────────── │
        │   │   │         R∗T∗(i+1)−Sₙ(0)     │
        │   │   └─────────────────────────────┘
        │   │           │
        │   │           ▼
        │   │      ┌─────────┐
        │   │      │ i ← i+1 │──── S806
        │   │      └─────────┘
        │   │           │           S807
        │   │           ▼
        │   │        ╱─────────╲
        │   └── Yes ─│ i≦m−1?  │
        │            ╲─────────╱
        │                │ No
        │                ▼
        │   ┌────────────────────────────────┐
        │   │ Sqq←min(Qₙ(i))(0≦1≦m−1)         │──── S808
        │   └────────────────────────────────┘
        │                │
        │                ▼
        │      ┌────────────────────┐
        │      │ CODES ONE PIECE    │
        │      │    OF PICTURE      │──── S809
        │      │ ACCORDING TO SQQ   │
        │      └────────────────────┘
        │                │
        │                ▼
        │           ┌─────────┐
        │           │ n ← n+1 │──── S810
        │           └─────────┘
        │                │           S811
        │                ▼
        │            ╱─────────╲
        └──── No ────│  STOP?  │
                     ╲─────────╱
                         │ Yes
                         ▼
                     ( END )
```

$$S_n(0) \leftarrow \begin{cases} 0 & : n = 1 \\ \mathrm{MAX}\{0,\ S_{n+1}(0) + SZ(n-1) - Rp * T\} & : n \geq 2 \end{cases}$$

$$Q_n(i) \leftarrow \frac{\displaystyle\sum_{k=0}^{i} X(k)}{R * T * (i+1) - S_n(0)}$$

$Sqq \leftarrow \min(Q_n(i))\ (0 \leq 1 \leq m-1)$